# EUROPÄISCHE PATENTSCHRIFT

(11) **EP 1 266 533 B1**
(45) Veröffentlichungstag und Bekanntmachung des Hinweises auf die Patenterteilung: **08.02.2006**
(21) Anmeldenummer: 01931366.7
(22) Anmeldetag: 16.03.2001
(51) Int. Cl.: H04Q 7/34, H04L 1/00

(54) **VERFAHREN ZUR ÜBERWACHUNG DER ÜBERTRAGUNGSQUALITÄT IN EINEM ZELLULAREN FUNK-KOMMUNIKATIONSSYSTEM UND ENTSPRECHENDES SYSTEM**
METHOD FOR MONITORING THE TRANSMISSION QUALITY IN A CELLULAR RADIO COMMUNICATIONS SYSTEM AND CORRESPONDING SYSTEM
PROCEDE DE SURVEILLANCE DE LA QUALITE DE TRANSMISSION DANS UN SYSTEME DE COMMUNICATION RADIO CELLULAIRE ET SYSTEME CORRESPONDANT

(30) Priorität: 20.03.2000 DE 10013798
(43) Veröffentlichungstag der Anmeldung: 18.12.2002
(73) Patentinhaber: SIEMENS AKTIENGESELLSCHAFT, 80333 München (DE)
(72) Erfinder: OESTREICH, Stefan, 83607 Holzkirchen (DE)
(86) Internationale Anmeldenummer: PCT/DE2001/001005
(87) Internationale Veröffentlichungsnummer: WO 2001/072056

(56) Entgegenhaltungen:
- WO-A-99/60742
- "ETSI EN 301 709, V.7.0.2, Digital cellular telecommunications system (Phase 2+); Link adaptation (GSM 05.09 version 7.0.2 Release 1998)" ETSI EN 301 709, V.7.0.2, 1. Dezember 1999 (1999-12-01), Seiten 1-13, XP002177164

## Beschreibung

Die vorliegende Erfindung betrifft ein Verfahren zur Überwachung der Übertragungsqualität in einem zellularen Funk-Kommunikationssystem, das für die Funkübertragung in jeder seiner Zellen eine Mehrzahl von Signalkodierungs- und Dekodierungsverfahren, im folgenden als Codec Mode bezeichnet, unterstützt.

In Funk-Kommunikationssystemen werden Informationen wie beispielsweise Sprache, Bildinformationen oder andere Nutzdaten mit Hilfe von elektromagnetischen Wellen über eine Funkschnittsstelle zwischen einer sendenden und einer empfangenden Funkstation, wie beispielsweise einer Basisstation bzw. einer Mobilstation im Falle eines Mobilfunksystems, übertragen. Sendende und empfangende Station weisen jeweils einen Encoder/Decoder, kurz als Codec bezeichnet, auf, der dazu dient, einen zu sendenden z.B. binär kodierten digitalen Datenstrom in eine Kodierung umzusetzen, die für die Funkübertragung gut geeignet ist, bzw. einen per Funk empfangenen Datenstrom in seine ursprüngliche Kodierung zurückzuwandeln.

Die Informationsübertragung erfolgt dabei in sogenannten Rahmen, d. h. es werden alle Daten innerhalb einer Rahmendauer von z. B. 20 ms zusammengefaßt und gemeinsam kodiert/dekodiert.

Es sind eine Vielzahl von Signalkodier- und Dekodierverfahren bzw. Codec-Modes bekannt, die jeweils für unterschiedliche Übertragungsverhältnisse auf der Funkstrecke zwischen Sender und Empfänger optimiert sind.

Aufgrund der Mobilität der Teilnehmer kann die Übertragungsqualität auf dem Funkweg in Mobilfunk-Kommunikationsystemen kurzfristig stark variieren. Die Verwendung unterschiedlicher Codec-Modes dient dazu, auch unter diesen variablen Bedingungen eine befriedigende Sprachkommunikation zu ermöglichen. Unterschiedliche Codec-Modes verwenden unterschiedliche Verfahren für die Datenkompression und -reduzierung, die ein Sprachsignal in einen digitalisierten Datenstrom mit jeweils unterschiedlichen Datenraten umsetzen. Nach der Funkübertragung wird der digitalisierte Datenstrom am Empfänger wieder in ein Sprachsignal zurückgewandelt. Je höher die Datenrate des digitalisierten Stroms ist, um so besser ist offensichtlich die Genauigkeit, mit der das ursprüngliche Signal am Empfänger reproduziert werden kann. Deshalb wäre es grundsätzlich wünschenswert, das digitalisierte Sprachsignal mit einer möglichst hohen Rate übertragen zu können.

Die Datenrate, die auf einem Kanal eines herkömmlichen Funk-Kommunikationsnetzes übertragen werden kann, ist allerdings für eine Sprachübertragung mit hoher Klangtreue in Echtzeit nicht ausreichend. Beim bekannten GSM-Mobilfunksystem beträgt diese Datenrate z.B. 22,8 kb/s für einen Kanal. Hinzu kommt das Problem, daß die Funkübertragung von Daten insbesondere in Mobilfunknetzen fehleranfällig ist, weil die Übertragungsbedingungen zwischen Sender und Empfänger aufgrund der Mobilität der Teilnehmer sehr variabel sind und es häufig vorkommt, daß ein von einem Sender ausgestrahltes Daten-Funksignal den Empfänger auf mehreren Wegen unterschiedlicher Länge erreicht, so daß das vom Empfänger empfangbare Signal aus mehreren Komponenten zusammensetzt, die einen a priori unbekannten Zeit- und Phasenversatz zueinander aufweisen.

Um unter diesen Bedingungen ein verständliches Sprachsignal übertragen zu können, ist es notwendig, in dem zur Verfügung stehenden Kanal nicht nur den digitalisierten Sprachdatenstrom zu übertragen, sondern darüber hinaus Zusatzinformaticnen, die auf Seiten des Senders aus dem Sprachdatenstrom generiert werden und die es dem Empfänger ermöglichen, zu erkennen, wenn Daten fehlerhaft oder nicht empfangen worden sind, und diese Daten gegebenenfalls zu rekonstruieren. Selbstverständlich ist sowohl die Übertragung des Sprachdatenstroms als auch die der zu seiner Rekonstruktion übertragenen Daten, als Schutzdaten bezeichnet, fehleranfällig. Daher ist die Menge an Schutzdaten, die benötigt wird, um eine gegebene Menge an Nutzdaten zuverlässig rekonstruieren zu können, um so größer, je größer die Fehlerrate der Übertragung ist.

Da die gesamte Übertragungskapazität eines Kanals begrenzt ist und nach Möglichkeit immer vollständig ausgenutzt werden soll, kann das Verhältnis von Sprach- oder allgemeiner Nutzdaten zu Schutzdaten nur dadurch variiert werden, daß bei schlechten Übertraaunasbedingungen der den Nutzdaten zur Verfügung stehende Anteil an der Gesamtbandbreite des Kanals niedrig und bei guten Übertragungsbedingungen hoch festgelegt wird. Um den Sprachdatenstrom mit variabler Datenrate entsprechend der zur Verfügung stehenden Bandbreite erzeugen zu können, werden jeweils unterschiedliche Datenkompressions-und Reduktionsverfahren bzw. Codec-Modes eingesetzt.

Für Sender und Empfänger des GSM-Systems ist aus den GSM-Spezifikationen 06.71 und 06.90 der GSM AMR-Codec bekannt, der 8 Codec-Modes (CM) für die Vollratenübertragung und 6 Codec-Modes für die Halbratenübertragung unterstützt. Jeder dieser Modes setzt ein Sprachsignal in einen digitalisierten Datenstrom einer bestimmten Rate um und ist für einen bestimmten Bereich der Übertragungsqualität optimiert.

Wenn sich die Übertraaungsqualität des Kanals ändert, werden die Codecs von Sender und Empfänger auf den der aktuellen Qualität angemessenen Codec Mode umgeschaltet. Diese Umschaltung erfolgt, indem der Empfänger, wenn er den aktuell verwendeten Codec Mode als nicht optimal ansieht, an den Sender einen Befehl überträgt, auf einen anderen, in dem Befehl bezeichneten Codec Mode umzuschalten. Der AMR-Codec verwendet zwei Arten solcher Befehle. Der eine umfaßt zwei an einer vorgegebenen Stelle eines Sprachrahmens übertragene Bits, die jeweils einen von vier möglichen Codec-Modes zu spezifizieren erlauben. Diese vier Modes werden als ein Codec Mode Set bezeichnet. Die Zusammensetzung der Codec Mode Sets ist an sich willkürlich und wird gegenwärtig von den Netzbetreibern aufgrund von Erfahrungswerten festgelegt.

Die Zahl der vom AMR-Codec unterstützten Codec-Modes ist jedoch größer als vier. Es lassen sich daher nicht alle Codec Modes in der oben beschriebenen Weise anwählen. Wenn auf einen Codec Mode umgeschaltet werden soll, der dem aktuellen Codec Mode Set nicht angehört, so muß hierzu ein sogenannter Escape-Rahmen (ER) übertragen werden, der es ermöglicht, einen anderen Codec Mode Set auszuwählen. Dieser Escape-Rahmen wird anstelle eines Sprachrahmens gesendet, führt also zu einer Verschlechterung der Sprachqualität. Wenn die Codec Mode Sets ungünstig zusammengestellt sind, kann es vorkommen, daß häufig zwischen zwei Sets gewechselt werden muß.

Eine optimale Zusammensetzung der Codec Mode Sets festzulegen, die es ermöglicht, die Zahl der erforderlichen Escape-Rahmen zu minimieren, ist nicht chne weiteres möglich. Da die örtlichen Randbedingungen, die die Übertragungsqualität bestimmen, jeweils von einer Zelle eines Mobilfunknetzes zur anderen unterschiedlich sind, kann aus der Tatsache, daß ein bestimmter Codec Mode Set für eine erste Zelle sehr gut geeignet ist und ein hoher Prozentsatz der Codec-Mode-Wechsel, die in dieser Zelle anfallen, sich innerhalb dieses Sets abspielt, nicht gefolgert werden, daß der gleiche Set auch für eine Nachbarzelle geeignet ist. Erschwerend kommt hinzu, daß die Übertragungsbedingungen innerhalb einer Zelle nicht allein durch die geographischen Gegebenheiten der Zelle bestimmt sind. So kann die Übertragungsqualität eines Endgeräts, das sich an einem gegebenen Ort der Zelle befindet, stark davon abhängen, welcher Zeitschlitz ihm zugeordnet ist, weil möglicherweise einzelne Zeitschlitze an diesem Ort stark von Interferenzen durch eine Nachbarzelle betroffen sind, andere jedoch nicht. Gleiches gilt für die verschiedenen innerhalb einer Zelle verwendeten Übertragungsfrequenzen. Deshalb kann selbst innerhalb einer Zelle ein Codec Mode Set, der für einen ersten Zeitschlitz gut geeignet ist, sich für einen zweiten Zeitschlitz als ungünstig erweisen.

Um jederzeit eine korrekte Dekodierung der per Funk übertragenen Daten am Empfänger zu gewährleisten, werden ferner mit jedem Sprachrahmen zwei Bits übertragen, die den vom Sender verwendeten Codec Mode angeben, indem sie einen von vier Codec Modes des jeweils gültigen Codec Mode Set spezifizieren.

Es gibt also zwei Typen von Codec Mode. Information oder CM-Information, die in den Zellen des Funk-Kommunikationssystems zwischen Endgeräten und Basisstation übertragen wird, einen ersten Typ, der einen Partner einer Verbindung über den vom anderen Partner verwendeten Codec Mode informiert, und einen zweiten, der ihm mitteilt, welchen Codec Mode der erste Partner von ihm empfangen möchte.

Ein weiteres Problem herkömmlicher zellularer Funk-Kommunikationsysteme ist, daß es an einem einfach zu handhabenden Verfahren fehlt, das es erlaubt, genauen Aufschluß über die Verteilung der Übertragungsqualität innerhalb geographischer Teilbereiche wie etwa einzelner Zellen des Systems zu geben und Daten über die Übertragungsqualität jeweils auf diese Teilbereiche bezogen zu gewinnen, die als Grundlage für eine Planung des weiteren Ausbaus des Funk-Kommunikationsnetzes bzw. seiner Zellen herangezogen werden können.

Aus der WO 99/60742 A ist ein System sowie ein Verfahren für eine Ratenanpassung eines Multiraten-Vocoders bekannt. Abhängig von einer Interferenzbeeinflussung der Übertragung über die Funkschnittstelle wird eine geeignete Vocoder-Rate sowie der Grad einer Kanalkodierung sowohl für die Übertragung in Uplink als auch im Downlink ausgewählt, wobei die Auswahl entweder zentral in einer Basisstation oder für die jeweilige Übertragungsrichtung in der Basisstation sowie der Mobilstation erfolgt.

Aus der DE 197 42 124 A1 ist ein Verfahren zur Sprachübertragung bekannt, bei dem für eine Auswahl einer senderseitigen Sprach- und Kanalkodierung sowohl aktuelle als auch historische charakteristische Werte bezüglich von Übertragungsverhältnissen der Funkschnittstelle berücksichtigt werden.

Eine Aufgabe der Erfindung ist, ein Verfahren zur Überwachung der Übertragungsqualität in einem zellularen Funk-Kommunikationsystem und ein für die Durchführung des Verfahrens geeignetes Funk-Kommunikationsystem anzugeben, das es erlaubt, auf einfache Weise Daten über die Übertragungsqualität zu ermitteln, die als Grundlage für die Planung eines weiteren Ausbaus des Funk-Kommunikationsnetzes bzw. für die Festlegung eines optimal an gegebene Übertragungsbedingungen angepaßten Codec Mode Sets herangezogen werden können.

Eine weitere Aufgabe ist, ein Funk-Kommunikationssystem anzugeben, das zur Durchführung eines solchen Verfahrens geeignet ist.

Diese Aufgaben werden durch die Verfahren mit dem Merkmalen der unabhängigen Patentansprüche 1 und 16, sowie durch das Funk-Kommunikationsystem mit den Merkmalen des unabhängigen Patentanspruchs 17 gelöst. Vorteilhafte Weiterbildungen sind Gegenstand von abhängigen Patentansprüchen.

Das erfindungsgemäße Verfahren setzt ein Funk-Kommunikationsystem voraus, das für die Funkübertragung in jeder seiner Zellen eine Mehrzahl von verschiedenen Codec-Modes unterstützt, wobei die in einer Zelle arbeitenden Endgeräte und eine Basisstation dieser Zelle die Verwendung der Codec Modes betreffende Informationen, als Codec Mode Informationen oder CM-Informationen (CM - Codec Mode) bezeichnet, miteinander austauschen. Erfindungsgemäß wird der Umfang der Benutzung der einzelnen Codec-Modes erfaßt, indem diese CM-Informationen aus dem Datenverkehr der Zelle gefiltert, und in einer auf die einen geographischen Teilbereich des Funk-Kommunikationssystems bezogenen Statistik gesammelt werden.

Anhand des Ausmaßes, in dem die verschiedenen Codec-Modes innerhalb des Teilbereiches genutzt werden, läßt sich in einfacher Weise auf die Güte der Übertragungsbedingungen in dem Teilbereich rückschließen. So kann z.B. ein Mittelwert über die Verwendung der einzelnen Codec-Modes berechnet werden, um so die Übertragungsbedingungen in den einzelnen Teilbereichen des Funk-Kommunikationsystems miteinander vergleichbar zu machen und auf diese Weise diejenigen Teilbereiche zu ermitteln, die eine auffällig schlechte mittlere Übertragungsqualität aufweisen und daher am dringendsten einer Verbesserung bedürfen. Ferner können auch die Ausmaße der Verwendung der einzelnen Codec-Modes in den Teilbereichen miteinander verglichen werden. So kann eine ungewöhnliche Verteilung der Gebrauchshäufigkeit der einzelnen Codec-Modes z. B. ein Hinweis dafür sein, daß es in einem Teilbereich Regionen oder Kanäle gibt, deren Übertragungsbedingungen auffällig schlechter sind als im Mittel des Teilbereiches, und daß gezielte Maßnahmen notwendig sind, um für diese Regionen oder Kanäle die Übertragungsbedingungen zu verbessern.

Insbesondere dann, wenn die Statistik dazu dienen soll, Daten für die Planung des weiteren Netzausbaus zu liefern, ist es zweckmäßig, daß die Statistik für jeden Codec Mode eine Größe erfaßt, die für die Zahl der unter Verwendung des betreffenden Codec-Modes übertragenen Rahmen repräsentativ ist. Damit gleichbedeutend wäre eine Erfassung der unter Verwendung des betreffenden Codec-Modes übertragenen Datenmenge oder abgelaufenen Gesprächszeit. Hierfür kann man sich darauf beschränken, aus dem Datenverkehr der Zelle die CM-Informationen zu filtern, mit der ein Partner einer Funkverbindung, Endgerät oder Basisstation, den von ihm verwendeten Codec Mode dem jeweils anderen Partner anzeigt.

Wenn es darum geht, den für eine gegebene Zelle optimalen Codec Mode Set zu ermitteln, ist weniger die Zahl der Rahmen interessant als eine Information darüber, wie oft ein Befehl zum Wechseln in einen gegebenen Modus übertragen worden ist. Hierfür kann man sich darauf beschränken, aus dem Datenverkehr die CM-Informationen zu filtern, die Steuerbefehle zum Festlegen des vom jeweils anderen Partner zu verwendenden Codec Modes sind.

Zweckmäßig ist es, wenn der geographische Bereich, für den die Statistik erhoben wird, mit der Zelle identisch ist.

Die Statistik wird zweckmäßigerweise an einer zentralen Stelle der Zelle geführt, etwa an der Basisstation, an der alle Funkverbindungen zu den Endgeräten zusammenlaufen und die daher besonders geeignet ist, die Befehle zur Verwendung eines bestimmten Codec-Modes aus dem Funkdatenverkehr auszufiltern. Ein weiterer geeigneter Ort ist die TRAU, über die der gesamte Datenverkehr der betreffenden Zelle mit anderen Zellen des Funk-Kommunikationsnetzes oder mit anderen Netzen läuft, oder aber auch eine Basisstationssteuerung BSC (Base Station Controller) bzw. RNC (Radio Network Controller).

Da Uplink- und Downlinkübertragung - Übertragung in Aufwärts- bzw. Abwärtsrichtung - zwischen der Basisstation und den Endgeräten der Zelle in einem TDMA-Funk-Kommunikationsystem wie dem GSM-System im allgemeinen jeweils zeitlich versetzt erfolgt, kann es vorkommen, daß bei einer bidirektionalen Verbindung die Qualitäten des Uplinks und des Downlinks sich unterscheiden, etwa weil einer von beiden mit einem im gleichen Takt ausgestrahlten Funksignal einer Nachbarzelle interferiert und der andere nicht. Zu ähnlichen Diskrepanzen kann es auch kommen, wenn Uplink und Downlink auf unterschiedlichen Frequenzen übertragen werden und eine der Frequenzen gestört ist. Um derartige Effekte zu erkennen, ist es zweckmäßig, wenn die Statistik getrennt für Uplink und Downlink geführt wird.

Aus dem gleichen Grunde kann es auch von Vorteil sein, die Statistik für jede Übertragungsfrequenz und/oder jeden Zeitschlitz der Zelle getrennt zu führen.

Die Steuerbefehle zum Festlegen des zu verwendenden Codec-Modes können in an sich bekannter Weise einen Befehl zum Auswählen einer Menge von Codec-Modes unter wenigstens zwei Mengen und einen Befehl zum Festlegen des zu verwendenden Codec-Modes in der gegenwärtig ausgewählten Menge umfassen. Um die Effizienz der Übertragung zu verbessern, sollte die Zahl der Befehle zum Auswählen einer Menge von Codec-Modes, die übertragen werden müssen, möglichst gering sein. Dies wird in einfacher Weise z.B. dadurch erreicht, daß die Zusammensetzung der Mengen anhand der Statistik so festgelegt wird, daß eine der Mengen die meistbenutzten Codec-Modes umfaßt.

Es sind Funk-Kommunikationsysteme bekannt, bei denen die Daten beim Übergang von der Basisstation in ein Festnetz zur Übertragung zu einer anderen Basisstation nicht umkodiert werden, sondern der von dem Sender-Endgerät verwendete Codec Mode bei der Festnetzübertragung erhalten bleibt und die Daten von der Basisstation eines Empfängerendgerätes unter Verwendung des gleichen Codec-Modes ausgestrahlt werden. Bei dieser als Tandem Free Operation (TFO) bekannten Betriebsweise wird der verwendete Codec Mode durch das schwächste Glied der Übertragungskette bestimmt. Dies bedeutet bei jedem der an einer Verbindung beteiligten Endgeräte: Wenn ein erstes dieser Endgeräte einen Befehl zum Verwenden eines Codec-Modes für schlechte Übertragungsverhältnisse sendet, so liegt der Grund in den Übertragungsverhältnissen der Zelle eben dieses Endgeräts. Wenn es aber einen solchen Befehl empfängt, so kann dieser von dem zweiten Endgerät oder von der Basisstation des ersten Endgeräts kommen. Daher müssen Steuerbefehle, die im Rahmen des Tandem Free Betriebs von der Zelle des Sender-Endgeräts zu der des Empfänger-Endgeräts oder umgekehrt übertragen werden, in der Statistik der jeweils anderen Zelle unberücksichtigt bleiben oder gesondert berücksichtigt werden, da sie über Übertragungsverhältnisse in dieser anderen Zelle nichts oder nicht mit Sicherheit etwas aussagen. Umgekehrt ist es jedoch sehr wohl möglich, daß in einer Zelle über die aus einer fremden Zelle kommenden Steuerbefehle eine eigene Statistik geführt wird, um auf diese Weise Aufschluß über die Übertragungsverhältnisse dieser fremden Zelle zu gewinnen.

Weitere Merkmale und Vorteile der Erfindung ergeben sich aus der nachfolgenden Beschreibung von Ausführungsbeispielen mit Bezug auf die Figuren. Es zeigen:
- Fig. 1: ein Blockdiagramm einer ersten Ausgestaltung eines erfindungsgemäßen Funk-Kommunikationsystems,
- Fig. 2: ein Beispiel einer Statistik,
- Fig. 3: ein Blockdiagramm einer zweiten Ausgestaltung des Funk-Kommunikationsystems, und
- Fig. 4: ein Beispiel einer in dem Funk-Kommunikationsystem nach Fig. 3 aufgenommenen Statistik.

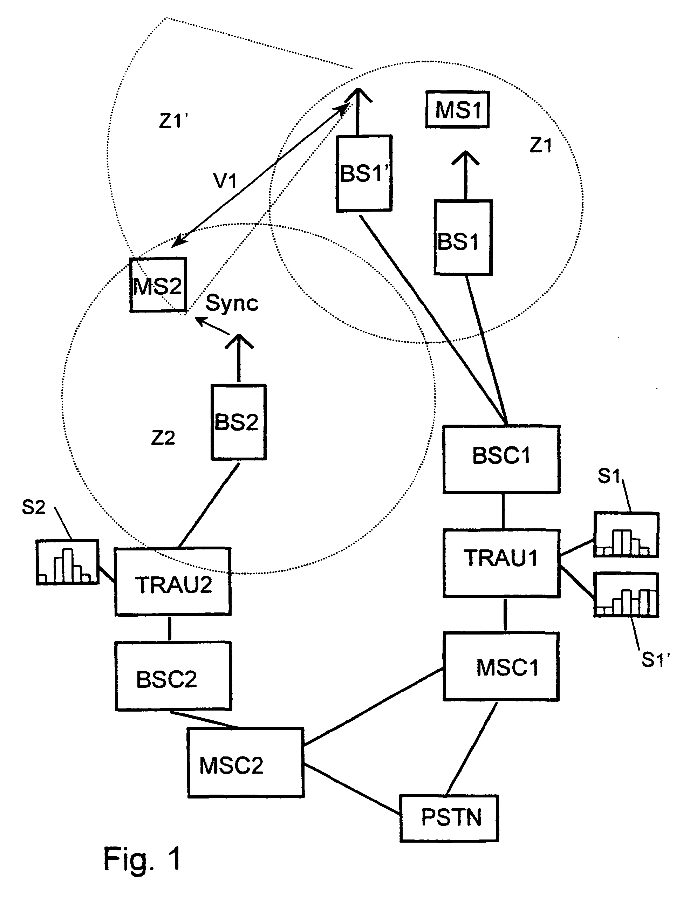

Das in Fig. 1 stark schematisiert dargestellte erfindungsgemäße Funk-Kommunikationsystem besteht aus einer Vielzahl von Netzelementen, insbesondere von Mobilvermittlungsstellen, von denen zwei MSC1, MSC2 in der Figur dargestellt sind. Innerhalb eines Funk-Kommunikationsystems sind die Mobilvermittlungsstellen MSC1, MSC2 untereinander vernetzt, außerdem verfügen sie jeweils über Verbindungen zu einem stationären Telekommunikationsnetz PSTN, um darüber Verbindungen zu Teilnehmern an diesem stationären Netz oder anderen Mobilfunknetzen herzustellen.

Die Mobilvermittlungsstellen MSC1, MSC2 sind mit Basisstationen BS1, BS1'1, BS2 jeweils über sogenannte Transcoding and Rate Adaptation Units, kurz TRAUs, sowie Basisstationssteuerungen BSC1, BSC2 verbunden. Die Basisstationen BS1, BS1', BS2 kommunizieren mit den in ihren jeweiligen Zellen Z1, Z'1, Z2 befindlichen Mobilstationen wie etwa MS1, MS2 unter Verwendung jeweils eines von mehreren wählbaren Codec-Modes, die für die Datenübertragung auf dem Funkweg optimiert sind. Aufgabe der TRAUs ist es, diese Kodierung in eine für die drahtgebundene Weiterleitung optimierte Kodierung umzusetzen und die Datenraten anzupassen.

Der für die Funkübertragung der Daten zwischen mobilem Endgerät und Basisstation verwendete Codec Mode wird im Dialog zwischen mobilem Endgerät und Basisstation festgelegt: Wenn einer der beiden Kommunikationspartner feststellt, daß die Qualität des empfangenen Signals unter einen gegebenen Grenzwert fällt, z.B. durch Überwachung der Bitfehlerrate, so sendet er an den anderen Partner eine Aufforderung, einen Codec Mode zu verwenden, der besser als der gegenwärtige an schlechte Übertragungsbedingungen angepaßt ist. Genau so kann ein für bessere Übertragungsbedingungen angepaßter Codec Mode ausgewählt werden, wenn die Bitfehlerrate so niedrig ist, daß dies vertretbar erscheint.

Das hier als Beispiel herangezogene GSM-Funk-Kommunikationsystem mit AMR-Codec verwendet in an sich bekannter Weise acht verschiedene Vollraten-Codec-Modes und sechs Halbraten-Modes. Die Vollraten-Modes sind zu zwei Gruppen oder Codec Mode Sets zusammengefaßt. Um innerhalb eines Codec Mode Sets den Codec Mode zu wechseln, genügt es, innerhalb des üblichen Sprachübertragungsrahmens 2 Bits zu übertragen, die eine Nummer des zu verwendenden Codec-Modes bezeichnen. Ein Codec Mode des zweiten Sets kann auf diese Weise nicht ausgewählt werden. Um dies zu tun, muß anstelle eines Sprachrahmens ein Escape-Rahmen eingeschoben werden, der einen Befehl zum Anwählen des zweiten Codec Mode Sets enthält.

Die Daten einer Mobilkemmunikation zwischen den Endgeräten MS1 und MS2 laufen über die Basisstationen BS1, BS2 und die TRAUs 1 und 2, in denen jeweils eine Umkodierung stattfindet. Die für die Übertragung zwischen Endgerät MS1 und BS1 bzw. zwischen BS2 und Endgerät MS2 verwendeten Codec-Modes können unterschiedlich sein. Sämtliche von den mobilen Endgeräten der Zelle Z1 gesendeten Rahmen einschließlich eventueller Codec-Mode-Auswahlbefehle, erreichen somit die TRAU1, wo sie ausgewertet und in einen Speicher S1 statistisch erfaßt werden. In dem Speicher S1 ist jedem Codec Mode ein Speicherelement zugeordnet, dessen Inhalt jedesmal inkrementiert wird, wenn ein Befehl, den betreffenden Codec Mode zu verwenden, empfangen wird. Auf diese Weise werden sämtliche Codec-Mode-Auswahlbefehle erfaßt, die von den Mobilstationen ausgehen. Um die statistische Grundlage zu vergrößern, kann vorgesehen werden, daß jede Basisstation an ihre TRAU auch diejenigen Codec-Mode-Auswahlbefehle meldet, die sie selbst erzeugt und an eines der mobilen Endgeräte in ihrer Zelle sendet.

Die Codec-Modes 1 bis 4 und 5 bis 8 werden erfindungsgemäß in zwei Codec Mode Sets zusammengefaßt, wobei ein Set die am häufigsten angewählten Modes 1 bis 4 umfaßt. Der bei weitem überwiegende Teil aller Codec-Mode-Wechsel spielt sich somit im Set mit den Codec-Modes 5 bis 8 ab.

Da die TRAU1 neben der Basisstation 1 auch an die Basisstation BS1 angeschlossen ist, ist ihr ein zweiter Speicher S1'zugeordnet, um dort die im Datenverkehr der BS1'ausgetauschten Codec-Mode-Auswahlbefehle zu erfassen.

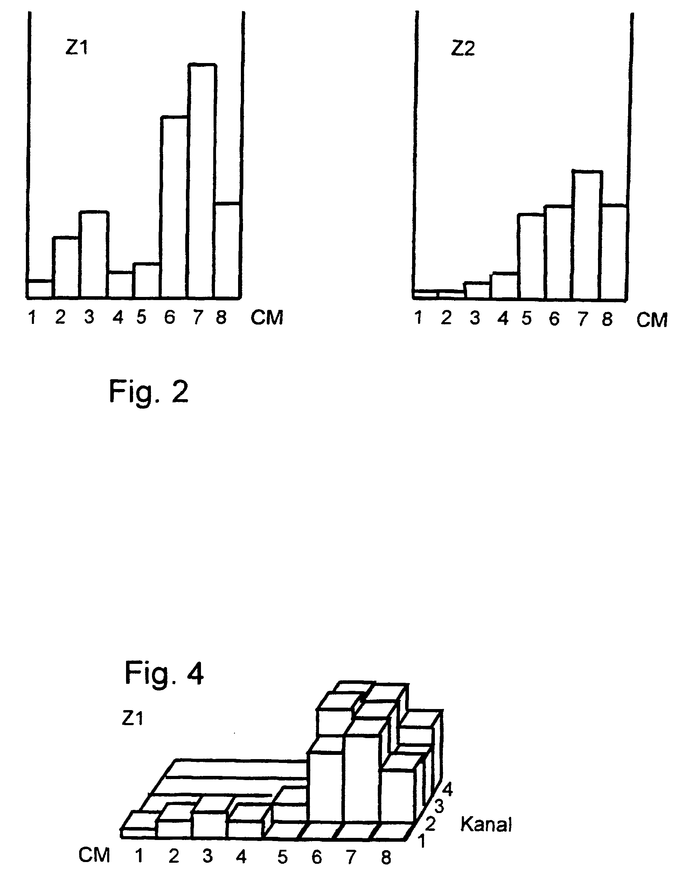

Fig. 2 zeigt zwei Beispiele für Statistiken, die innerhalb eines gleichen Zeitraums für die Zellen Z1 und Z2 in den Speichern S1, S2 aufgenommen worden sind. Dabei sind die Codec-Modes, hier mit 1 bis 8 durchnumeriert, in der Reihenfolge der Übertragungsqualitäten angeordnet, an die sie angepaßt sind. Das heißt der Codec Mode 1 entspricht den schlechtesten, der Codec Mode 8 den besten Übertragungsbedingungen. Die Höhe der einzelnen Spalten entspricht jeweils der Zahl der empfangenen Befehle zur Auswahl des betreffenden Codec-Modes, dividiert durch die Gesamtzahl der in der Zelle vertelefonierten Gesprächsminuten. Man erkennt, daß sich in der Zelle 2 der überwiegende Anteil der Auswahlbefehle sich auf die Codec-Modes 5 bis 8 konzentriert, während die Codec-Modes 1 bis 4 nur schwach vertreten sind. Die Empfangsbedingungen in der Zelle Z2 sind also offenbar im allgemeinen gut.

Die Codec Modes 1 bis 4 werden erfindungsgemäß in zwei Codec Mode Sets zusammengefaßt, wobei ein Set die am häufigsten angewählten Modes 5 bis 8 und der andere die selten ausgewählten Modes 1 bis 4 enthält. Der bei weitem überwiegende Teil der Codec-Mode-Wechsel spielt sich somit im Set mit den Modes 5 bis 8 ab.

Codec-Mode-Auswahlbefehle, die aus Richtung der Vermittlungsstelle MSC1 aus kommend die TRAU1 durchlaufen, was bei TFO vorkommen kann, werden in der Statistik nicht aufgenommen, da sie durch die Übertragungsverhältnisse in der Zelle Z2 veranlaßt sind und über Z1 nichts aussagen.

Bei der Statistik der Zelle Z1 sind die Spalten insgesamt im Mittel höher als die der Zelle Z2, und die Codec-Modes 2 und 3 sind relativ häufig ausgewählt worden. Dies deutet darauf hin, daß es in der Zelle Z1 eine Region mit relativ schlechten Übertragungsbedingungen geben muß, und daß es, um die Netzqualität insgesamt zu verbessern, lohnend sein könnte, diese Zone ausfindig zu machen, und ihre Übertragungsbedingungen zu optimieren, z.B. durch Sektorisierung der Zelle Z1 oder durch Einrichtung einer neuen Zelle. Die insgesamt im Mittel relativ hohen Zählwerte der einzelnen Spalten der Statistik von Z1 weisen darauf hin, daß in dieser Zelle der Codec Mode häufig gewechselt wird, daß also vermutlich die Übertragungsbedingungen zeitlich oder örtlich stark fluktuieren.

Um in der Zelle Z1 die Zahl der Codec-Mode-Wechsel, für die die Übertragung eines Escape-Rahmens erforderlich ist, möglichst klein zu halten, wird die Zusammensetzung der Codec-Mode-Sets anders als in Zelle Z2 festgelegt: Ein Set enthält die häufig angewählten Modes 3, 6, 7, 8 und ein anderer die selten angewählten Modes 1, 2, 4, 5.

Um die Übertragungsqualität innerhalb einer Zelle im Vergleich mit anderen Zellen des Mobilfunk-Kommunikaticnssystems zu bewerten, kann z.B. ein Mittelwert über die Nummern der Codec Modes, gewichtet mit der Höhe ihrer Spalten in der Statistik, gebildet, für die Zellen des Systems an einer zentralen Stelle gesammelt und verglichen werden, und diejenigen Zellen, die die schlechtesten Mittelwerte aufweisen, werden als verbesserungsbedürftig angesehen. Alternativ kann auch einfach für jede Zelle der Anteil einer bestimmten Zahl von jeweils für die schlechtesten Übertragungsbedingungen optimierten Codec Modes an der Statistik ermittelt werden, und eine Zelle wird als verbesserungsbedürftig angesehen, wenn dieser Anteil einen gegebenen Grenzwert überschreitet.

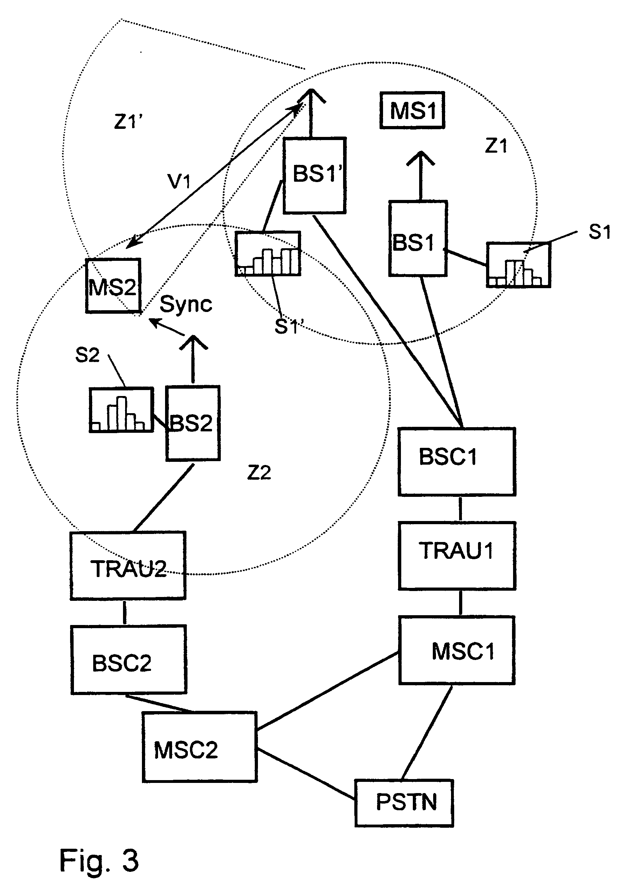

Das in Fig. 3 dargestellte Funk-Kommunikationsystem unterscheidet sich von dem aus Fig. 1 augenfällig dadurch, daß die Speicher S1, S1', S2 zum Sammeln von statistischen Daten über die Codec-Mode-Auswahlbefehle den Basisstationen und nicht den TRAUs zugeordnet sind. Die Basisstationen filtern die Codec-Mode-Auswahlbefehle aus dem Funkdatenverkehr zwischen ihnen und den mobilen Endgeräten in ihrer Zelle. Dadurch, daß die Befehle aus dem Funkverkehr gefiltert werden, ist es leicht möglich, zu jedem einzelnen Befehl zu erfassen, in welchem Zeitschlitz des GSM-Rahmens und auf welcher Frequenz er gesendet wurde, das heißt jeder Befehl kann einem bestimmten Übertragungskanal der Zelle zugeordnet werden. Die Statistik wird in den Speichern S1, S1', S2 nach Kanälen getrennt geführt. Es existieren für jede Kombinazion von in der Zelle verwendeter Frequenz und Zeitschlitz Speicherplätze entsprechend der Zahl der zur Auswahl stehenden Codec-Modes, und jeder dieser Speicherplätze wird inkrementiert, wenn ein Befehl zur Auswahl des entsprechenden Codec Mode mit der entsprechenden Frequenz im entsprechenden Zeitschlitz übertragen wird. Da ein durch seine Frequenz und die Lage seines Zeitschlitzes definierter Übertragungskanal im Duplexbetrieb nur für Uplink oder Downlink, nicht aber für beides gleichzeitig genutzt werden kann, beinhaltet diese kanalweise Erfassung zugleich eine getrennte Erfassung von Up- und Downlink.

Fig. 4 zeigt ein Beispiel, wie unter den gleichen Bedingungen wie bei Fig. 2 eine nach Kanälen differenzierende Statistik für die Zelle Z1 aussehen könnte. Dabei sind abweichend von den tatsächlichen Verhältnissen im GSM-System und zur Vereinfachung der Darstellung nur vier Kanäle berücksichtigt.

Wie man sieht, sind die Übertragungsbedingungen auf dem Kanal 1 insgesamt schlecht, es werden praktisch nur die Codec-Modes 1 bis 4 benutzt. Die drei Kanäle 2 bis 4 hingegen weisen bessere Übertragungsbedingungen auf. Aus dieser detaillierteren Statistik läßt sich also sofort schließen, daß die bereits in Fig. 2 gezeigte häufige Verwendung der Codec-Modes 2 und 3 auf die Übertragungsverhältnisse eines einzelnen Kanals und damit auf eine Interferenz zurückzuführen ist, und nicht etwa darauf, daß es in der Zelle Z1 eine Region gibt, die für das Funksignal der Basisstation BS1 schlecht zu erreichen ist.

Um die zur Auswahl der Codec-Modes zu übertragende Zahl von Escape-Rahmen zu minimieren, wird für jeden einzelnen Kanal ein Codec-Mode-Set definiert, der die am häufigsten verwendeten Codec-Modes enthält. Im Falle des Kanals 1 sind dies die Codec-Modes 1 bis 4; die Codec-Modes 5 bis 8 ergeben einen zweiten Set. Bei den Kanäle 2 bis 4 sind die Codec-Modes 5 bis 8 die am häufigsten verwendeten, folglich werden auch hier Codec Mode Sets bestehend aus den Codec-Modes 5 bis 8 bzw. 1 bis 4 gebildet. Trotz der unterschiedlichen Übertragungsverhältnisse der Kanäle sind hier also zufällig die Zusammensetzungen der Codec Mode Sets für alle Kanäle der Zelle gleich. Dieses Ergebnis steht im Gegensatz zu der für die Zelle 1 mit der einfacheren Statistik gemäß Fig. 2 erhaltenen Codec-Mode-Set-Zusammensetzung. Bei der Statistik nach Fig. 2 waren die Codec-Modes 3, 6, 7 und 8 in einer Gruppe zusammengefaßt. Anhand von Fig. 4 erkennt man nun, daß dies für eine Übertragung auf den Kanal 1 nicht die optimale Lösung gewesen wäre, da bei jedem Wechsel von Codec Mode 3 zu einem der anderen für diesen Kanal wichtigen ein Escape-Rahmen erforderlich gewesen wäre.

Bei der vorangehenden Beschreibung sind nur solche Codec Mode Sets betrachtet worden, die Vollraten-Codec-Modes enthielten. Selbsterständlich ist die Erfindung in gleicher Weise auch auf die Steuerung der Verwendung von Halbraten-Codec-Modes anwendbar. Dabei können einzelne Codec Modes auch mehreren Sets angehören. Denkbar ist auch, daß gemischte Codec Mode Sets gebildet werden, die sowohl Vollraten- als auch Halbraten-Codec-Modes enthalten.

Als weitere Alternative kann anstatt, wie oben beschrieben, von der in der Zelle übertragenen CM-Information nur die Befehle zum Anwählen eines jeden Codec Modes auszufiltern und in der Statistik zahlenmäßig zu erfassen, auch der Anteil eines jeden Codec Modes am Kommunikationsaufkommen der Zelle erfaßt werden, so etwa indem die Spalten der Statistik jedesmal inkrementiert werden, wenn ein Rahmen unter Verwendung des der Spalte zugeordneten Codec Mode übertragen worden ist. Zu diesem Zweck kann man denjenigen Anteil der CM-Informationen (CM - Codec Mode) an dem Datenverkehr der Zelle ausfiltern, der die mit jedem Rahmen übertragenen, den für diesen Rahmen geltenden Codec Mode spezifierenden Bits umfaßt.

## Patentansprüche

1. Verfahren zur Überwachung der Übertragungsqualität in einem zellularen Funk-Kommunikationssystem, das für die Funkübertragung in jeder seiner Zellen (Z1, Z1', Z2) zwischen der Basisstation (BS1, BS1', BS2) der Zelle und einem in der Zelle arbeitenden Endgerät (MS1, MS2) eine Mehrzahl von verschiedenen Codec Modes unterstützt, wobei die Codec Modes in wenigstens zwei Codec Mode Sets zusammengefaßt werden und die Basisstation und das Endgerät einer Verbindung die Verwendung der Codec Modes betreffende Informationen miteinander austauschen,
**dadurch gekennzeichnet, daß**
der Umfang der Benutzung der einzelnen Codec Modes ermittelt wird,
diese Informationen in einer jeweils auf einen geographischen Teilbereich des Funk-Kommunikationssystems bezogenen Statistik (S1, S1', S2) gesammelt werden, und anhand der Statistik die Zusammensetzung der Codec Mode Sets festgelegt wird.

2. Verfahren nach Anspruch 1, **dadurch gekennzeichnet, daß** die von einem ersten Partner einer Verbindung übertragenen Informationen Steuerbefehle zum Festlegen des von dem zweiten Partner der Verbindung zu verwendenden Codec Modes sind.

3. Verfahren nach Anspruch 1 oder 2, **dadurch gekennzeichnet, daß** die Statistik (S1, S1', S2) für jeden Codec Mode eine Größe erfaßt, die für die Häufigkeit der Übertragung eines Steuerbefehls zur Verwendung des betreffenden Modus repräsentativ ist.

4. Verfahren nach einem der vorhergehenden Ansprüche, **dadurch gekennzeichnet, daß** die von einem ersten Partner einer Verbindung übertragenen Informationen dem zweiten Partner den von dem ersten Partner verwendeten Codec Mode anzeigen.

5. Verfahren nach einem der vorhergehenden Ansprüche, **dadurch gekennzeichnet, daß** die Statistik für jeden Codec Mode eine Größe erfaßt, die für die Zahl der unter Verwendung des betreffenden Codec Mode übertragenen Rahmen repräsentativ ist.

6. Verfahren nach einem der vorhergehenden Ansprüche, **dadurch gekennzeichnet, daß** der geographische Teilbereich mit der Zelle identisch ist.

7. Verfahren nach einem der vorhergehenden Ansprüche, **dadurch gekennzeichnet, daß** die Statistik an einer Basisstation (BS1, BS1', BS2), einer Basisstationssteuerung (BSC1, BSC2) oder einer TRAU (TRAU1, TRAU2) der Zelle geführt wird.

8. Verfahren nach einem der vorhergehenden Ansprüche, **dadurch gekennzeichnet, daß** die Statistik getrennt für Uplink und Downlink geführt wird.

9. Verfahren nach einem der vorhergehenden Ansprüche, **dadurch gekennzeichnet, daß** die Statistik für jede Übertragungsfrequenz der Zelle getrennt geführt wird.

10. Verfahren nach einem der vorhergehenden Ansprüche, **dadurch gekennzeichnet, daß** die Statistik für jeden Zeitschlitz eines Übertragungskanals der Zelle getrennt geführt wird.

11. Verfahren nach einem der vorhergehenden Ansprüche, **dadurch gekennzeichnet, daß** die Steuerbefehle zum Festlegen des Codec Mode einen Befehl zum Auswählen einer Menge von Codec Modes unter wenigstens zwei Mengen und einen Befehl zum Festlegen des zu verwendenden Codec Mode in der gegenwärtig ausgewählten Menge umfassen, und daß die Zusammensetzung der Mengen so festgelegt wird, daß die zu übertragende Zahl von Befehlen zum Auswählen der Menge von Codec Modes minimiert wird.

12. Verfahren nach einem der vorhergehenden Ansprüche, **dadurch gekennzeichnet, daß** die Steuerbefehle zum Festlegen des Codec Mode einen Befehl zum Auswählen einer Menge von Codec Modes unter wenigstens zwei Mengen und einen Befehl zum Festlegen des zu verwendenden Codec Mode in der gegenwärtig ausgewählten Menge umfassen, und daß die Zusammensetzung der Mengen so festgelegt wird, daß eine der Mengen die meistbenutzten Codec Modes umfaßt.

13. Verfahren nach einem der vorhergehenden Ansprüche, **dadurch gekennzeichnet, daß** in Tandem-Free-Betrieb zwischen zwei Endgeräten verschiedener geographischer Teilbereiche übertragene Informationen in der Statistik unberücksichtigt bleiben.

14. Verfahren nach Anspruch 13, **dadurch gekennzeichnet, daß** von in Tandem-Free-Betrieb zwischen zwei Endgeräten eines ersten und eines zweiten geographischen Teilbereichs übertragenen Informationen nur diejenigen in der auf den ersten geographischen Teilbereich bezogenen Statistik berücksichtigt werden, deren Verwendung durch Übertragungsbedingungen im ersten geographischen Teilbereich veranlaßt wird.

15. Verfahren nach Anspruch 13 oder 14, **dadurch gekennzeichnet, daß** ferner eine auf den zweiten geographischen Teilbereich bezogene Statistik geführt wird, in der von im Tandem-Free-Betrieb übertragenen Codec Mode-Informationen diejenigen berücksichtigt werden, deren Verwendung durch Übertragungsbedingungen im zweiten geographischen Teilbereich veranlaßt wird.

16. Verfahren zur Überwachung der Übertragungsqualität in einem zellularen Funk-Kommunikationssystem, das für die Funkübertragung in jeder seiner Zellen (Z1, Z1', Z2) zwischen der Basisstation (BS1, BS1', BS2) der Zelle und einem in der Zelle arbeitenden Endgerät (MS1, MS2) eine Mehrzahl von verschiedenen Codec Modes unterstützt, wobei die Codec Modes in wenigstens zwei Codec Mode Sets zusammengefaßt werden und die Basisstation und das Endgerät einer Verbindung die Verwendung der Codec Modes betreffende Informationen miteinander austauschen,
**dadurch gekennzeichnet, daß**
der Umfang der Benutzung der einzelnen Codec Modes ermittelt wird,
diese Informationen in einer jeweils auf einen geographischen Teilbereich des Funk-Kommunikationssystems bezogenen Statistik (S1, S1', S2) gesammelt werden, und die Statistik für einen Ausbau des Funk-Kommunikationssystems berücksichtigt wird.

17. Zellulares Funk-Kommunikationssystem,
mit einer Mehrzahl von Basisstationen (BS1, BS1', BS2), die für die Funkübertragung in ihren jeweiligen Zellen (Z1, Z1', Z2) eine Mehrzahl von verschiedenen Codec Modes unterstützen, wobei die in einer Zelle (Z1, Z2) arbeitenden Endgeräte (MS1, MS2) und die jeweilige Basisstation (BS1, BS2) der Zelle Steuerbefehle miteinander austauschen, die den für eine Übertragung vom Endgerät zur Basisstation bzw. von der Basisstation zu verwendenden Codec Mode festlegen, wobei die Codec Modes in wenigstens zwei Codec Mode Sets zusammengefaßt werden,
mit einem der Zelle (Z1, Z2) zugeordneten Speicher (S1, S1', S2) zum statistischen Erfassen eines Umfangs der Benutzung der einzelnen Codec Modes in der Zelle der Basisstation, und
mit Mitteln zum Festlegen der Zusammensetzung der Codec Mode Sets in der Zelle der Basisstation anhand der Statistik.

18. Zellulares Funk-Kommunikationssystem nach Anspruch 17, **dadurch gekennzeichnet, daß** der Speicher (S1, S1', S2) jeweils an einer der Zelle (Z1, Z2) zugeordneten TRAU (TRAU1, TRAU2,) oder Basisstationssteuerung (BSC1, BSC2) angesiedelt ist.

## Claims

1. Method for monitoring the transmission quality in a cellular radio communication system, which for radio transmission in each of its cells (Z1, Z1', Z2) between the base station (BS1, BS1', BS2) of the cell and a terminal (MS1, MS2) operating in the cell, supports a plurality of different codec modes, with the codec modes being grouped into at least two codec mode sets and the base station and the terminal of a connection exchanging information with each other relating to the use of the codec modes,
**characterized in that**
the scope of use of the individual codec modes is determined,
this information is collected in statistics (S1, S1', S2) related to a geographical subarea of the radio communication system in each case, and the composition of the codec mode sets is determined on the basis of the statistics.

2. Method according to claim 1, **characterized in that** the information transmitted from a first partner of a connection is control commands for determining the codec modes to be used by the second partner of the connection.

3. Method in accordance with claim 1 or 2, **characterized in that** the statistics (S1, S1', S2) record a variable for each codec mode which is representative of the frequency of the transmission of a control command for use of the mode concerned.

4. Method in accordance with one of the previous claims, **characterized in that** the information transmitted from a first partner of a connection indicates to the second partner the codec mode used by the first partner.

5. Method in accordance with one of the previous claims, **characterized in that** the statistics for each codec mode record a variable which is representative of the number of the frames transmitted using the codec mode involved.

6. Method in accordance with one of the previous claims, **characterized in that** the geographical subarea is identical to the cell.

7. Method in accordance with one of the previous claims, **characterized in that** the statistics are maintained at a base station (BS1, BS1', BS2), of a base station controller BSC (BSC1, BSC2) or of a TRAU (TRAU1, TRAU2) of the cell.

8. Method in accordance with one of the previous claims, **characterized in that** the statistics are maintained separately for uplink and downlink.

9. Method in accordance with one of the previous claims, **characterized in that** the statistics are maintained separately for each transmission frequency of the cell.

10. Method in accordance with one of the previous claims, **characterized in that** the statistics are maintained separately for each timeslot of a transmission channel of the cell.

11. Method in accordance with one of the previous claims, **characterized in that** the control commands for defining the codec mode comprise a command to select a set of codec modes from at least two sets and a command to determine the codec mode used in the presently selected set, and that the composition of the sets is defined such that the number of commands to be transmitted to select the set of codec modes is minimized.

12. Method in accordance with one of the previous claims, **characterized in that** the control commands for defining the codec mode comprise a command to select a set of codec modes from at least two sets and a command to determine the codec mode used in the presently selected set, and and that the composition of the sets is defined such that one of the sets comprises the most used codec modes.

13. Method in accordance with one of the previous claims, **characterized in that**, in Tandem-Free operation information transmitted between two terminals of different geographical subareas is excluded from consideration in the statistics.

14. Method in accordance with claim 13, **characterized in that**, of information transmitted in Tandem-Free operation between two terminals of a first and a second geographical subarea, only the statistics relating to the first geographical subarea are considered for which the use is initiated by transmission conditions in the first geographical subarea.

15. Method in accordance with claim 13 or 14, **characterized in that**, furthermore statistics are maintained relating to the second geographical subarea, in which, of the codec mode information transmitted in Tandem-Free operation the information taken into account is that for which the used is initiated by transmission conditions in the second geographical subarea.

16. Method for monitoring the transmission quality in a cellular radio communication system, which for radio transmission in each of its cells (Z1, Z1', Z2) between the base station (BS1, BS1', BS2) of the cell and a terminal (MS1, MS2) operating in the cell, supports a plurality of different codec modes, with the codec modes being grouped into at least two codec mode sets and the base station and the terminal of a connection exchanging information with each other relating to the use of the codec modes,
**characterized in that**
the scope of use of the individual codec modes is determined,
this information is collected in statistics (S1, S1', S2) related to a geographical subarea of the radio communication system in each case, and the statistics are taken into account for an expansion of the radio communication system.

17. Cellular radio communication system,
with a plurality of base stations (BS1, BS1', BS2), which, for the radio transmission in their relevant cell (Z1, Z1', Z2) support a plurality of different codec modes, with the terminals (MS1, MS2) operating in a cell (Z1, Z2) and the relevant base station (BS1, BS2) of the cell exchanging control commands with each other which define the codec modes to be used for a transmission from the terminal to the base station or from the base station, with the codec modes being grouped into at least two codec mode sets,
with a memory (S1, S1', S2) assigned to a cell (Z1, Z2) for statistical recording of the extent to which the individual codec modes are used in the cell of the base station, and with means to define the composition of the codec mode sets in the cell of the base station on the basis of the statistics.

18. Cellular radio communication system in accordance with claim 17, **characterized in that** the memory (S1, S1', S2) is accommodated in each case at a TRAU (TRAU1, TRAU2,) or Base Station Controller BSC (BSC1, BSC2) assigned to a cell (Z1, Z2).

## Revendications

1. Procédé de surveillance de la qualité de transmission dans un système de radiocommunication cellulaire qui supporte une pluralité de différents modes codec pour la radiotransmission, dans chacune de ses cellules (Z1, Z1', Z2), entre la station de base (BS1, BS1', BS2) de la cellule et un terminal (MS1, MS2) fonctionnant dans la cellule, les modes codec étant regroupés en au moins deux sets de modes codec et la station de base et le terminal d'une connexion échangeant entre eux des informations concernant l'utilisation des modes codec,
**caractérisé en ce que**
le volume d'utilisation des modes codec individuels est déterminé,
ces informations sont collectées dans une statistique (S1, S1', S2) relative à respectivement une zone géographique partielle du système de radiocommunication, et **en ce que** la composition des sets de modes codec est déterminée à l'aide de la statistique.

2. Procédé selon la revendication 1, **caractérisé en ce que** les informations transmises par un premier partenaire d'une communication sont des instructions de commande destinées à déterminer le mode codec à utiliser par le deuxième partenaire de la communication.

3. Procédé selon la revendication 1 ou 2, **caractérisé en ce que** la statistique (S1, S1', S2) enregistre pour chaque mode codec une grandeur qui est représentative pour le nombre d'occurrence de transmissions d'une instruction de commande pour l'utilisation du mode concerné.

4. Procédé selon l'une quelconque des revendications précédentes, **caractérisé en ce que** les informations transmises par un premier partenaire d'une communication indiquent au deuxième partenaire le mode codec utilisé par le premier partenaire.

5. Procédé selon l'une quelconque des revendications précédentes, **caractérisé en ce que** la statistique enregistre pour chaque mode codec une grandeur qui est représentative pour le nombre de trames transmises en utilisant le mode codec concerné.

6. Procédé selon l'une quelconque des revendications précédentes, **caractérisé en ce que** la zone géographique partielle est identique à la cellule.

7. Procédé selon l'une quelconque des revendications précédentes, **caractérisé en ce que** la statistique est gérée sur une station de base (BS1, BS1', BS2), sur un contrôleur de station de base (BSC1, BSC2) ou sur une unité TRAU (TRAU1, TRAU2) de la cellule.

8. Procédé selon l'une quelconque des revendications précédentes, **caractérisé en ce que** la statistique est gérée séparément pour la liaison montante et pour la liaison descendante.

9. Procédé selon l'une quelconque des revendications précédentes, **caractérisé en ce que** la statistique est gérée séparément pour chaque fréquence de transmission de la cellule.

10. Procédé selon l'une quelconque des revendications précédentes, **caractérisé en ce que** la statistique est gérée séparément pour chaque créneau temporel d'un canal de transmission de la cellule.

11. Procédé selon l'une quelconque des revendications précédentes, **caractérisé en ce que** les instructions de commande destinées à déterminer le mode codec comprennent une instruction pour sélectionner un ensemble de modes codec parmi au moins deux ensembles et une instruction pour déterminer le mode codec à utiliser dans l'ensemble sélectionné présentement, et **en ce que** la composition des ensembles est déterminée de telle manière que le nombre d'instructions à transmettre pour sélectionner l'ensemble de modes codec est minimisé.

12. Procédé selon l'une quelconque des revendications précédentes, **caractérisé en ce que** les instructions de commande destinées à déterminer le mode codec comprennent une instruction pour sélectionner un ensemble de modes codec parmi au moins deux ensembles et une instruction pour déterminer le mode codec à utiliser dans l'ensemble sélectionné présentement, et **en ce que** la composition des ensembles est déterminée de telle manière que l'un des ensembles comprend les modes codec les plus utilisés.

13. Procédé selon l'une quelconque des revendications précédentes, **caractérisé en ce que** les informations transmises en fonctionnement « tandem free » entre deux terminaux de différentes zones géographiques partielles restent inconsidérées dans la statistique.

14. Procédé selon la revendication 13, **caractérisé en ce que** parmi les informations transmises en fonctionnement « tandem free » entre deux terminaux d'une première et d'une deuxième zones géographiques partielles, seules celles sont prises en considération dans la statistique relative à la première zone géographique partielle, dont l'utilisation est causée par des conditions de transmission dans la première zone géographique partielle.

15. Procédé selon la revendication 13 ou 14, **caractérisé en ce que**, en outre, une statistique relative à la deuxième zone géographique partielle est gérée, dans laquelle, parmi des informations de mode codec transmises en fonctionnement « tandem free », sont pris en considération celles dont l'utilisation est causée par des conditions de transmission dans la deuxième zone géographique partielle.

16. Procédé de surveillance de la qualité de transmission dans un système de radiocommunication cellulaire qui supporte une pluralité de différents modes codec pour la radiotransmission, dans chacune de ses cellules (Z1, Z1', Z2), entre la station de base (BS1, BS1', BS2) de la cellule et un terminal (MS1, MS2) fonctionnant dans la cellule, les modes codec étant regroupés en au moins deux sets de modes codec et la station de base et le terminal d'une connexion échangeant entre eux des informations concernant l'utilisation des modes codec,
**caractérisé en ce que**
le volume d'utilisation des modes codec individuels est déterminé,
ces informations sont collectées dans une statistique (S1, S1', S2) relative à respectivement une zone géographique partielle du système de radiocommunication, et **en ce que** la statistique est prise en considération pour une extension du système de radiocommunication.

17. Système de radiocommunication cellulaire,
comprenant une pluralité de stations de base (BS1, BS1', BS2) qui supportent une pluralité de différents modes codec pour la radiotransmission dans leurs cellules respectives (Z1, Z1', Z2), les terminaux (MS1, MS2) fonctionnant dans une cellule (Z1, Z2) et la station de base respective (BS1, BS2) de la cellule échangeant entre eux des instructions de commande, qui déterminent le mode codec à utiliser pour une transmission du terminal vers la station de base resp. par la station de base, les modes codec étant regroupés en au moins deux sets de modes codec,
comprenant une mémoire (S1, S1', S2) affectée à la cellule (Z1, Z2) pour l'enregistrement statistique d'un volume d'utilisation des modes codec individuels dans la cellule de la station de base, et
comprenant des moyens pour déterminer la composition des sets de modes codec dans la cellule de la station de base à l'aide de la statistique.

18. Système de radiocommunication cellulaire selon la revendication 17, **caractérisé en ce que** la mémoire (S1, S1', S2) est installée respectivement sur une unité TRAU (TRAU1, TRAU2) affectée à la cellule (Z1, Z2) ou sur un contrôleur de la station de base (BSC1, BSC2).
